**Europäisches Patentamt**

**European Patent Office**

**Office européen des brevets**

(19)

(11) Veröffentlichungsnummer: **0 212 619**
A2

## (12) EUROPÄISCHE PATENTANMELDUNG

(21) Anmeldenummer: **86111448.6**

(22) Anmeldetag: **19.08.86**

(51) Int. Cl.⁴: **G 05 D 1/00**

(30) Priorität: **19.08.85 BG 71491/85**

(43) Veröffentlichungstag der Anmeldung: **04.03.87**
**Patentblatt 87/10**

(84) Benannte Vertragsstaaten: **CH DE FR GB LI NL SE**

(71) Anmelder: **CENTRALNA LABORATORIA PO SISTEMI ZA UPRAVLENIE, Bl. 107 Akad. G. Bonchev St., Sofia (BG)**

(72) Erfinder: **Boyadjiev, Dimtscho Ivanov, G. Milev-Str. 49-A, Sofia (BG)**
Erfinder: **Mladenov, Descho Ivanov, P. Degelter-Str. 4, Sofia (BG)**
Erfinder: **Mihailov, Lyudmil Kostadinov, Studentski Grad, Bl. 23-2, Sofia (BG)**
Erfinder: **Koltschakov, Kiril Hristov, Komplex Kr. Polyana Orliza-Str. Bl. 31-2, Sofia (BG)**
Erfinder: **Botev, Kostadin Borisov, Komplex Drujba Bl. 82-2, Sofia (BG)**
Erfinder: **Zekov, Anton Dimitrov, Komplex Mladost-III Bl. 349, Sofia (BG)**
Erfinder: **Dinev, Kostadin Jivkov, Komplex Lyulin 11 Bl. 407, Sofia (BG)**
Erfinder: **Andronov, Michail Petrov, Komplex Mladost-III Bl. 307, Sofia (BG)**
Erfinder: **Koiev, Kolyo Entschev, Nikola Botuschev-Str. 17, Sofia (BG)**

(74) Vertreter: **Ebbinghaus, Dieter et al, v. FÜNER, EBBINGHAUS, FINCK Patentanwälte European Patent Attorneys Mariahilfplatz 2 & 3, D-8000 München 90 (DE)**

(72) Erfinder: **Zapryanov, Yordan Dimitrov, Sona B-5, Bl. 10-2, Sofia (BG)**

(54) **Verfahren und Anordnung zur Steuerung des Kraftstoffverbrauchs.**

(57) Das Verfahren für die Steuerung des Kraftstoffverbrauchs, das in Realzeit das Bestimmen und die Anzeige der relativen Reichweite eines Flugzeugs als Verhältnis der Fluggeschwindigkeit zum Kraftstoffverbrauch einschliesst, beinhaltet das Aufsuchen und Aufrechterhalten einer maximalen relativen Reichweite dadurch, dass in den Intervallen zwischen zwei aufeinanderfolgenden Suchvorgängen für das Maximum Steuerwirkungen für das Aufrechterhalten des Anstellwinkels ausgearbeitet werden, der dem letzten Maximum entspricht. Bei einer Änderung der Bedingungen, für die das Maximum gefunden wurde, wird ein neues Maximum gesucht, wobei die Suchrichtung bestimmt wird.

Die Anordnung für die Steuerung des Kraftstoffverbrauchs weist einen Geber (1) für die Fluggeschwindigkeit und einen Geber (2) für den Kraftstoff-Durchfluss sowie einen Rechen-Mikroprozessor (3) auf, der über ein Ausgangsinterface (4) mit einer Tastatur (5) und einer Digitalanzeige (6) verbunden ist. Beide Geber (1, 2) sind mit einem Mess-Mikroprozessor (7) verbunden. Geber (8, 9, 10, 11, 12) für Luftgeschwindigkeit, Anstellwinkel, Mach-Zahl, absolute Höhe und Kraftstoffdickte sind über einen Kontroll-Messblock (13) und den Mess-Mikroprozessor (7) mit einem zweiten Eingang des Ausgangsinterfaces (4) verbunden, das mit einem dritten Ausgang mit einem mnemonischen Anzeiger und mit einem vierten Ausgang mit einer Vorrichtung (15) für die Steuerung des Schubs der Flugzeugtriebwerke verbunden ist.

**0 212 619**

v. FÜNER          EBBINGHAUS          FINCK

PATENTANWÄLTE     EUROPEAN PATENT ATTORNEYS

MARIAHILFPLATZ 2 & 3, MÜNCHEN 90
POSTADRESSE: POSTFACH 95 01 60, D-8000 MÜNCHEN 95

CENTRALNA LABORATORIA PO          EPAB-34155.9
SISTEMI ZA UPRAVLENIE             19. August 1986


## VERFAHREN UND ANORDNUNG ZUR STEUERUNG DES KRAFTSTOFFVERBRAUCHS

Die Erfindung betrifft ein Verfahren und eine Anordnung für die Steuerung des Kraftstoffverbrauchs, die in der Luftfahrt einsetzbar sind.

Ein bekanntes Verfahren für die Steuerung des Kraftstoffverbrauchs bei verschiedenen Flugzeugtypen besteht darin, daß in Realzeit beim Flug in der vorgesehenen Höhe die relative Reichweite des Flugzeugs als Verhältnis der beiden Größen "Fluggeschwindigkeit" und "Kraftstoff-Durchfluß" bestimmt wird. Dann wird für den Kraftstoffverbrauch ein solcher Wert aufrechterhalten, bei dem das Kriterium "relative Reichweite" maximal ist. Zu diesem Zweck wird periodisch,nach bestimmten Zeitintervallen, die maximale relative Reichweite gesucht, wobei dessen in Realzeit bestimmter Wert verwendet wird. Nach dem Finden des Maximums wird die Luftgeschwindigkeit des Flugzeugs konstant aufrechterhalten (Fuel management computer model CD-3000: Airline pilot's operating and reference manual, 1981, Aero Systems Inc.).

Ein Nachteil des beschriebenen Verfahrens liegt darin, daß das Aufrechterhalten einer konstanten Luftgeschwindigkeit im Intervall zwischen zwei aufeinanderfolgenden Suchen der maximalen relativen Reichweite, zum sicheren Abweichen von den optimalen Bedingungen führt, z.B. infolge der Gewichtsabnahme des Flugzeugs beim Verbrauch von Kraftstoff. Außerdem führen Änderungen der äußeren Bedingungen, wie z.B. der Höhe, des Winds und der Lufttemperatur, zu einer zusätzlichen Änderung der Lage des Maximums der relativen Reichweite. Bis zum Ablauf des Zeitintervalls zwischen zwei Ablesungen wird ein Versetzen des Maximums nicht bemerkt und das Flugzeug fliegt längere Zeit bei nichtoptimalem Verbrauch. Außerdem wird während des Prozesses des Suchens der maximalen relativen Reichweite keine objektive Information für die Suchrichtung und für den Moment, wann das Suchen aufhören soll, erhalten. Dies führt zur Erhöhung der Anzahl der Iterationen beim Suchvorgang und zu einem zusätzlichen Kraftstoff-Mehrverbrauch.

Das beschriebene Verfahren für die Steuerung des Kraftstoffverbrauchs wird nach der obengenannten Literaturstelle durch eine Anordnung realisiert, die Geber für die Fluggeschwindigkeit und für den Kraftstoff-Durchfluß enthält, die mit einem Rechen-Mikroprozessor verbunden sind, der seinerseits über ein Ausgangsinterface mit einer Digitalanzeige und einer Tastatur verbunden ist.

Die Nachteile des Verfahrens gelten auch für die Anordnung.

Der Erfindung liegt die Aufgabe zugrunde, ein Verfahren und eine Anordnung für die Steuerung des Kraftstoffverbrauchs zu entwickeln, das bzw. die eine höhere Steuereffektivität aufweisen.

Diese Aufgabe wird durch ein Verfahren für die Steuerung des Kraftstoffverbrauchs gelöst, das in Realzeit das Bestimmen und die Anzeige der relativen Reichweite des Flugzeugs als Verhältnis der Fluggeschwindigkeit zum Kraftstoff-Durchfluß enthält. Das Suchen und Aufrechterhalten einer maximalen relativen Reichweite erfolgt dadurch, daß in den Intervallen zwischen zwei aufeinanderfolgenden Suchvorgängen für das Maximum Steuerwirkungen für das Aufrechterhalten des Anstellwinkels ausgearbeitet werden, der dem letzten Maximum entspricht. Bei einer Änderung der Bedingungen, für die das Maximum gefunden ist, wird ein neues Maximum gesucht, wobei die Suchrichtung bestimmt wird.

Die erfindungsgemäße Anordnung für die Steuerung des Kraftstoffverbrauchs weist einen Geber für die Fluggeschwindigkeit und einen für den Kraftstoff-Durchfluß und einen Rechen-Mikroprozessor auf, der über ein Ausgangsinterface mit einer Tastatur und einer Digitalanzeige verbunden ist. Die Geber für die Fluggeschwindigkeit und den Durchfluß sind mit einem Meß-Mikroprozessor verbunden. Geber für die Luftgeschwindigkeit, den Anstellwinkel, die Mach-Zahl, die absolute Höhe und die Kraftstoffdichte sind über einen Kontroll-Meßblock mit dem Meß-Mikroprozessor verbunden, der parallel mit dem Rechen-Mikroprozessor verbunden ist und an einem zweiten Eingang des Ausgangsinterfaces angeschlossen ist, das mit einem dritten Ausgang mit einem mnemonischen Anzeiger und mit einem vierten Ausgang mit einer Vorrichtung für die Steuerung des Schubs der Flugzeugtriebwerke verbunden ist.

Die Vorteile des erfindungsgemäßen Verfahrens und der Anordnung für die Steuerung des Kraftstoffverbrauchs liegen darin, daß durch das Aufrechterhalten eines konstanten Anstellwinkels in den Intervallen zwischen zwei aufeinanderfolgenden Suchvorgängen für die maximale relative Reichweite in bezug auf den Kraftstoffverbrauch ein Flug bei optimalen Bedingungen gewährleistet wird. Außerdem reduzieren das Optimieren und Automatisieren des Vorgangs der Maximumsuche die Anzahl der erforderlichen Iterationen. Dies alles führt zu einer Erhöhung der Steuereffektivität.

Die Erfindung soll nachstehend an einem Ausführungsbeispiel näher erläutert werden. Die zugehörige Zeichnung zeigt das Blockschema einer Anordnung für die Durchführung des erfindungsgemäßen Verfahrens.

Die Anordnung für die Steuerung des Kraftstoffverbrauchs weist einen Geber 1 für die Fluggeschwindigkeit, einen Geber 2 für den Durchfluß und einen Rechen-Mikroprozessor 3 auf, der über ein Ausgangsinterface 4 mit einer Tastatur 5 und einer Digitalanzeige 6 verbunden ist. Die Geber 1, 2 für die Fluggeschwindigkeit und für den Durchfluß sind mit einem Meß-Mikroprozessor 7 verbunden, wobei ein Geber 8 für die Luftgeschwindigkeit, ein Geber 9 für die Mach-Zahl, ein Geber 10 für den Anstellwinkel, ein Geber 11 für die absolute Höhe und ein Geber 12 für die Kraftstoffdichte über einen Kontroll-Meßblock 13 mit dem Meß-Mikroprozessor 7 verbunden sind, welcher parallel mit dem Rechen-Mikroprozessor 3 verbunden ist und an einen zweiten Eingang des Ausgangsinterfaces 4 angeschlossen ist, das mit einem dritten Ausgang mit einem mnemonischen Anzeiger 14 und mit einem vierten Ausgang mit einer Vorrichtung 15 für die Steuerung des Schubs der Flugzeugtriebwerke verbunden ist.

Die Wirkungsweise der Anordnung für die Steuerung des Kraftstoffverbrauchs ist folgende:

Vor dem Anlassen der Flugzeugtriebwerke wird die Speisung der Anordnung eingeschaltet und es werden über den Tastaturblock 5 das Gewicht des Flugzeugs und das des Kraftstoffs eingegeben. Gleichzeitig beginnt das automatische Eingeben von Daten von den Gebern 1, 2, 8, 9, 10, 11 und 12 für den Kraftstoff-Durchfluß, die Fluggeschwindigkeit, die Luftgeschwindigkeit, die Mach-Zahl, den Anstellwinkel, die absolute Höhe und die Kraftstoffdichte in das System. Nach dem Erreichen der Staffelhöhe erfolgt der erste Suchvorgang für die maximale relative Reichweite. Aufgrund der Informationen, die über den Kontroll-Meßblock 13 und den Meß-Mikroprozessor 7 in das System eingehen, werden durch den Rechen-Mikroprozessor 3 Steuerwirkungen ausgearbeitet, die über das Ausgangsinterface 4 der Vorrichtung 15 für die Steuerung des Schubs der Triebwerke eingegeben werden, so daß der Vorgang der Maximumsuche optimiert wird. Nach dem Finden der optimalen relativen Reichweite speichert das System die Werte des Anstellwinkels, der Staffelhöhe und der Fluggeschwindigkeit. Falls die zwei letztgenannten Größen zwischen zwei vorgegebenen Grenzwerten liegen, arbeitet der Rechen-Mikroprozessor 3 Steuerwirkungen für das Aufrechterhalten eines konstanten Anstellwinkels aus, die über das Ausgangsinterface 4 in die Vorrichtung 15 für die Steuerung des Schubs eingegeben werden. Falls die Staffelhöhe oder die Fluggeschwindigkeit diese Grenzwerte überschreitet, beginnt der Rechen-Mikroprozessor 3 Steuerwirkungen für das Suchen eines neuen Maximums auszuarbeiten. Alle Steuerwirkungen des Mikroprozessors 3 werden auch auf dem mnemonischen Display 14 angezeigt, was ein manuelles Übernehmen der automatischen Steuerung zur Erhöhung der Zuverlässigkeit ermöglicht. Während des Suchvorgangs nach der maximalen relativen Reichweite erscheinen der Anfangswert und die laufenden Werte der relativen Reichweite gleichzeitig auf der Digitalanzeige 6. Während der übrigen Dauer des Flugs können auf derselben Anzeige alle von den Gebern gemessenen Größen überwacht werden.

- 7 -

<u>P a t e n t a n s p r ü c h e</u>

1. Verfahren zur Steuerung des Kraftstoffverbrauchs, das in Realzeit das Bestimmen und die Anzeige der relativen Reichweite des Flugzeugs als Verhältnis der Fluggeschwindigkeit zum Kraftstoff-Durchfluß einschließt, dadurch   g e k e n n z e i c h n e t  , daß das Suchen und Aufrechterhalten einer maximalen relativen Reichweite dadurch erfolgt, daß in den Intervallen zwischen zwei aufeinanderfolgenden Suchvorgängen für das Maximum Steuerwirkungen für das Aufrechterhalten des Anstellwinkels ausgearbeitet werden, der dem letzten Maximum entspricht, und daß bei einer Änderung der Bedingungen, für die das Maximum gefunden wurde, ein neues Maximum gesucht wird, wobei die Suchrichtung bestimmt wird.

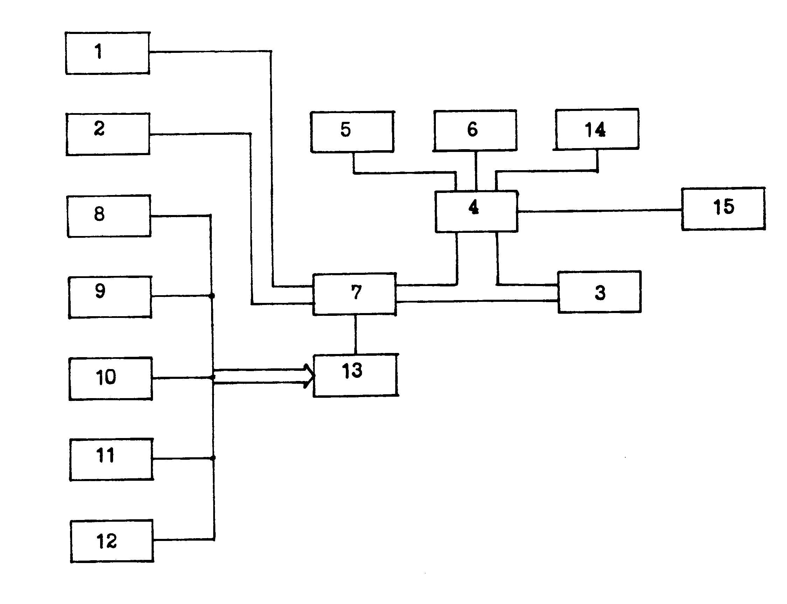

2. Anordnung zur Steuerung des Kraftstoffverbrauchs mit jeweils einem Geber für die Fluggeschwindigkeit und den Kraftstoff-Durchfluß und mit einem Rechen-Mikroprozessor, der über ein Ausgangsinterface mit einer Tastatur und einer Digitalanzeige verbunden ist, dadurch   g e k e n n z e i c h n e t  , daß die Geber (1, 2) für die Fluggeschwindigkeit und den Durchfluß mit einem Meß-Mikroprozessor (7) verbunden sind, wobei ein Geber (8) für die Luftgeschwindigkeit, ein Geber (9) für die Mach-Zahl, ein Geber (10) für den Anstellwinkel, ein Geber (11) für die absolute Höhe und ein Geber (12) für die Kraftstoffdichte über einen Kontroll-Meßblock (13) mit dem Meß-Mikroprozessor (7) verbunden sind, der parallel mit dem Rechen-Mikroprozessor (3) verbunden ist und an einen zweiten Eingang des Ausgangsinterfaces (4) angeschlossen ist, das mit einem dritten Ausgang mit einem mnemonischen Anzeiger (14) und mit einem vierten Ausgang mit einer Vorrichtung (15) für die Steuerung des Schubs der Flugzeugtriebwerke verbunden ist.